# FASCICULE DE BREVET EUROPEEN

(11) **EP 1 289 170 B1**
(45) Date de publication et mention de la délivrance du brevet: **26.04.2006**
(21) Numéro de dépôt: 02292080.5
(22) Date de dépôt: 22.08.2002
(51) Int. Cl.: H04B 7/185

(54) **Procédé d'établissement d'une communication radio entre un abonné résident sur un site et un abonné itinérant dans un véhicule.**
Funkverbindungsherstellungverfahren zwischen einem ortsgebundenen Teilnehmer und einem Mobilteilnehmer in einem Fahrzeug
Radio communication set-up method between a resident subscriber on a site and a mobile subscriber in a vehicle

(30) Priorité: 30.08.2001 FR 0111253
(43) Date de publication de la demande: 05.03.2003
(73) Titulaire: Globalsys, 94000 Creteil (FR)
(72) Inventeur: Retali, Dominique, 94170 Le Perreux (FR)
(74) Mandataire: Fruchard, Guy

(56) Documents cités:
- WO-A-99/46870
- FR-A- 2 775 859
- US-B1- 6 173 159

## Description

La présente invention concerne un procédé d'établissement d'une communication radio entre un abonné résidant implanté sur un site et un abonné itinérant implanté dans un véhicule.

L'invention s'applique plus particulièrement, bien que non exclusivement, à l'établissement d'une communication entre les membres d'équipage d'un avion et le personnel au sol d'un aéroport où l'avion effectue une escale.

On sait que lorsqu'un avion arrive sur un site il est nécessaire pour les membres d'équipage de rentrer en liaison avec le personnel au sol. La première communication à établir est celle assurant une liaison entre le pilote et le personnel de piste chargé de diriger l'avion vers son emplacement de stationnement.

A cet effet, on connaît du document FR-A-2 775 855 un procédé consistant à équiper les abonnés résidants avec des stations mobiles et à équiper des véhicules en particulier des avions, avec des stations de base chacune apte à émettre un signal de balise identifiant la station de base, à sélectionner une station de base par une station mobile, et à établir une communication entre la station mobile et la station de base sélectionnée.

Afin d'identifier les stations de base dont les avions sont équipés, il est prévu dans ce document d'introduire dans le signal de balise un élément d'identification de l'avion tel que le numéro d'immatriculation de l'avion ou le numéro du vol effectué par l'avion. Ce procédé présente l'avantage de permettre une identification directe de l'avion par une station mobile dès l'instant où celle-ci est à une distance de l'avion lui permettant de percevoir le signal de balise. Il implique toutefois la nécessité de modifier le signal de balise chaque fois qu'une station de base est mise en place sur un nouvel avion dans le cas où l'élément d'identification est le numéro d'immatriculation de l'avion, voire même à chaque vol dans le cas où l'élément d'identification est le numéro de vol. Ces modifications impliquent une reconfiguration de la station de base et peuvent donc constituer une contrainte inacceptable en particulier lors de la gestion d'une flotte importante de véhicules. En outre, dans de nombreux cas, le signal de balise est établi une fois pour toutes lors de la fabrication de la station de base et celle-ci porte alors une référence d'identification permanente.

Selon l'invention, on propose un procédé du type décrit dans le document précité, dans lequel chaque station de base comporte une référence d'identification indépendante du véhicule sur lequel la station de base est implantée, cette référence d'identification étant incluse dans le signal de balise correspondant, et chaque station mobile contient une table de correspondance entre la référence d'identification d'au moins une station de base et un élément d'identification du véhicule sur lequel la station de base est implantée.

Ainsi, lors de la détection d'un signal de balise, l'abonné résidant détenant une station mobile peut identifier de façon précise le véhicule correspondant au signal de balise reçu et effectuer une sélection appropriée de la station de base avec laquelle il souhaite entrer en communication.

Selon une version avantageuse de l'invention, la correspondance entre la référence d'identification d'une station de base et l'élément d'identification du véhicule correspondant est mise en mémoire dans la station de base et la table de correspondance détenue par une station mobile est mise à jour lors de chaque détection d'un signal de balise par la station mobile. Ainsi, dès l'instant où un véhicule se trouve à portée d'une station mobile, la table de correspondance est mise à jour et permet donc une identification précise du véhicule même si la correspondance entre la référence d'identification de la station de base et l'élément d'identification du véhicule a été modifiée très récemment, en particulier dans le cas où le véhicule est identifié par son numéro de vol. En outre la correspondance entre la référence d'identification de la station de base et l'élément d'identification du véhicule peut être modifiée par simple chargement d'un fichier dans une mémoire de la station de base sans re-configuration de celle-ci et donc sans modification du signal de balise.

Selon une autre version avantageuse de l'invention, la table de correspondance entre les références d'identification des stations de base et les éléments d'identification des véhicules relatives à une flotte est mise en mémoire sur un serveur et la table de correspondance de chaque station mobile est périodiquement mise à jour par une liaison de la station mobile avec le serveur. La mise à jour de la table de correspondance peut alors être effectuée lors d'une opération de maintenance de la station mobile, par exemple à chaque chargement de l'accumulateur alimentant la station mobile, de sorte que l'identification de tous les véhicules de la flotte reste disponible à tout instant.

D'autres caractéristiques et avantages de l'invention apparaîtront à la lecture de la description qui suit de deux modes de mise en oeuvre non limitatifs de l'invention, en relation avec la figure unique ci-jointe qui est une représentation schématique illustrant le procédé selon l'invention.

En référence à la figure, le procédé selon l'invention est destiné à établir une communication radio entre des abonnés itinérants 1 membres de l'équipage d'avions 2 et des abonnés résidants 3, membres du personnel au sol d'un site aéroportuaire sur lequel les avions font escale. A titre de simplification un seul avion 2 et un membre de personnel au sol 3 ont été représentés sur la figure.

De façon connue en soi du document FR-A-2 775 855, l'avion 2 est équipé d'une station de base 4, d'un système de radiocommunication tandis que les membres du personnel au sol 3 détiennent une station mobile 5 adaptée à communiquer avec la station de base 4. Afin de pouvoir établir des communications avec les abonnés résidants, la station de base 4 se fait connaître de ceux-ci en émettant un signal de balise dans lequel est inclus une référence d'identification de la station de base correspondante. Selon l'invention cette référence d'identification est indépendante de l'avion 2 sur lequel la station de base 4 est implantée. La référence d'identification est par exemple le numéro de série attribué à la station de base lors de sa fabrication.

Par ailleurs, chaque station mobile 5 comporte une table de correspondance 7 entre la référence d'identification d'au moins une station de base 4 et un élément d'identification de l'avion sur lequel la station de base est implantée, par exemple le numéro d'immatriculation 6 affiché sur l'avion ou le numéro du vol correspondant.

Selon un premier mode de mise en oeuvre du procédé selon l'invention, l'arrivée d'un avion dans la zone de portée de la station mobile 5 est détectée par la réception du signal de balise émis par la station de base 4, symbolisé par une flèche en trait mixte sur la figure. La station mobile 5 s'inscrit alors auprès de la station de base 4 et celle-ci envoie automatiquement, par exemple au moyen d'un message court illustré par une flèche tiretée, une information de correspondance entre la référence d'identification de la station de base 4 et un élément d'identification de l'avion, cette information de correspondance ayant été préalablement mémorisée dans la station de base 4, par exemple lors du chargement de l'ordinateur de bord de l'avion 2 avec les caractéristiques du vol, notamment le numéro du vol. On notera à ce propos que l'envoi d'un message court ne nécessite pas l'établissement d'une communication et peut donc être effectué automatiquement sans sélection préalable par la station mobile 5.

Le membre du personnel au sol 3 peut alors identifier les avions à sa portée et sélectionner l'avion avec lequel il souhaite entrer en communication. Une communication est alors établie comme illustré par la flèche en double trait sur la figure.

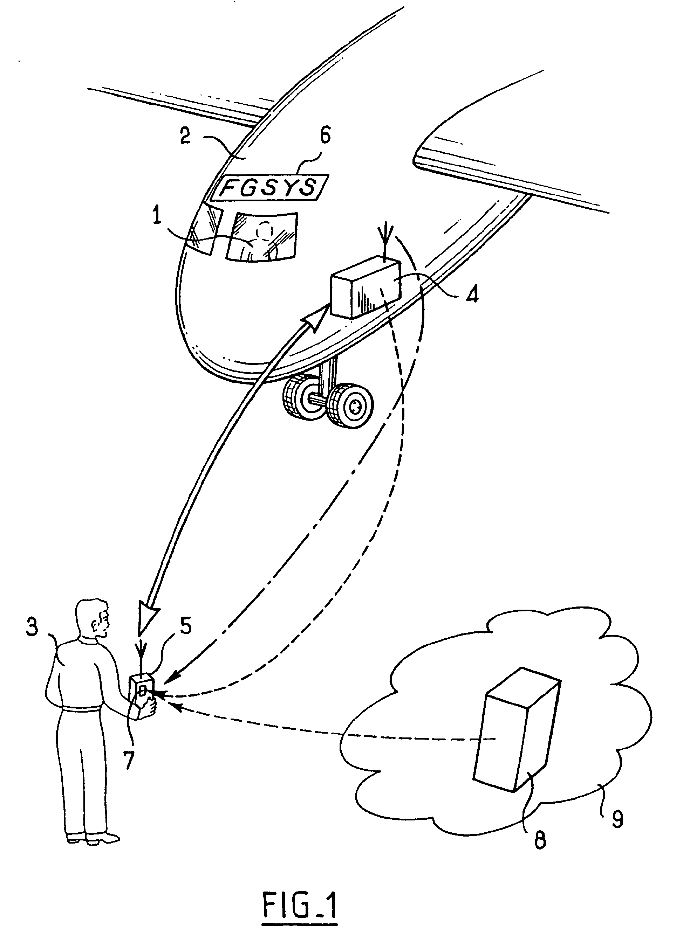

Selon un second mode de mise en oeuvre également illustré sur la figure 1, la table de correspondance entre les références d'identification des stations de base et les éléments d'identification des véhicules relatifs à une flotte de véhicules est mise en mémoire sur un serveur 8 intégré à un réseau 9. Lors d'une opération de maintenance de chaque station mobile, par exemple lors de la recharge d'un accumulateur d'alimentation de la station mobile 5, une liaison représentée par une flèche tiretée sur la figure est établie entre la station mobile 5 et le serveur 8 pour mettre à jour la table de correspondance mémorisée dans la station mobile 5. La périodicité de mise à jour de la table de correspondance dépend de l'élément d'identification utilisé pour les véhicules. A ce propos on notera que si l'élément d'identification est le numéro de vol, celui-ci est susceptible de varier au cours d'une même journée. Dans le cas d'une mise à jour simplement quotidienne de la table de correspondance, il est donc préférable de choisir le numéro d'immatriculation de l'avion comme élément d'identification de celui-ci.

Bien entendu, l'invention n'est pas limitée aux modes de mise en oeuvre décrits et on peut y apporter des variantes de réalisation sans sortir du cadre de l'invention tel que défini par les revendications.

En particulier, on peut prévoir la saisie des informations de correspondance par le personnel au sol lui-même avant sa prise de service. On peut également prévoir le chargement de la table de correspondance par une mise en communication des stations mobiles avec une station de base implantée au sol, cette station de base étant elle-même reliée au service opérationnel de l'aéroport afin d'effectuer lors de chaque mouvement d'avion une mise à jour des tables de correspondance détenues par l'ensemble des stations mobiles.

L'invention peut également être appliquée à la gestion des marchandises transportées par une flotte de véhicules terrestres, par exemple pour guider des véhicules vers différents entrepôts en fonction de la marchandise qu'ils transportent.

## Revendications

1. Procédé d'établissement d'une communication radio entre au moins un abonné résidant (3) implanté sur un site et détenant une station mobile (5), et au moins un abonné itinérant (1) implanté dans un véhicule (2) équipé avec une station de base (4) apte à émettre un signal de balise identifiant la station de base (4), chaque station mobile (5) étant adaptée à percevoir plusieurs signaux de balise émis par différentes stations de base (4), le procédé comportant les étapes de sélectionner une station de base (4) par une station mobile (5) et d'établir une communication entre la station mobile (5) et la station de base (4) sélectionnée, **caractérisé en ce que** chaque station de base (4) comporte une référence d'identification indépendante du véhicule sur lequel la station de base est implantée, cette référence d'identification étant incluse dans le signal de balise correspondant, et **en ce que** chaque station mobile (5) contient une table de correspondance (7) entre la référence d'identification d'au moins une station de base (4) et un élément d'identification du véhicule (2) sur lequel la station de base est implantée.

2. Procédé selon la revendication 1, **caractérisé en ce que** la table de correspondance (7) entre la référence d'identification d'une station de base et l'élément d'identification du véhicule correspondant est mise en mémoire dans la station de base (4) et la table de correspondance détenue par une station mobile (5) est mise à jour lors de chaque nouvelle détection d'un signal de balise par la station mobile (5).

3. Procédé selon la revendication 1, **caractérisé en ce que** la table de correspondance entre les références d'identification des stations de base et les éléments d'identification des véhicules relatifs à une flotte est mise en mémoire sur un serveur (8) et la table de correspondance (7) de chaque station mobile (5) est périodiquement mise à jour par une liaison de la station mobile (5) avec le serveur (8).

## Patentansprüche

1. Verfahren zum Herstellen einer Funkverbindung zwischen mindestens einem ortsgebundenen Teilnehmer (3), der eine Mobilstation (5) besitzt, und mindestens einem Mobilteilnehmer (1), der sich in einem Fahrzeug (2) befindet, das mit einer Basisstation (4) ausgerüstet ist, die dazu geeignet ist, ein Peilsignal abzugeben, das die Basisstation (4) identifiziert, wobei jede Mobilstation (5) dazu geeignet ist, mehrere, von verschiedenen Basisstationen (4) abgegebene Peilsignale zu erfassen, wobei das Verfahren die Schritte des Auswählens einer Basisstation (4) durch eine Mobilstation (5) und des Herstellens einer Verbindung zwischen der Mobilstation (5) und der ausgewählten Basisstation (4) umfasst, **dadurch gekennzeichnet, dass** jede Basisstation (4) eine Identifizierungsangabe enthält, die unabhängig von dem Fahrzeug ist, in dem die Basisstation angeordnet ist, wobei diese Identifizierungsangabe in dem entsprechenden Peilsignal enthalten ist, und dass jede Mobilstation (5) eine Korrespondenztabelle (7) mit den Korrespondenzen zwischen der Identifizierungsangabe mindestens einer Basisstation (4) und einem Identifizierungselement des Fahrzeugs (2) enthält, in dem die Basisstation angeordnet ist.

2. Verfahren nach Anspruch 1, **dadurch gekennzeichnet, dass** die Korrespondenztabelle (7) mit den Korrespondenzen zwischen der Identifizierungsangabe einer Basisstation und dem Identifizierungselement des entsprechenden Fahrzeuges in der Basisstation (4) gespeichert wird und die Korrespondenztabelle (7), die in einer Mobilstation (5) enthalten ist, bei jedem neuen Erfassen eines Peilsignals durch die Mobilstation (5) aktualisiert wird.

3. Verfahren nach Anspruch 1, **dadurch gekennzeichnet, dass** die Korrespondenztabelle (7) mit den Korrespondenzen zwischen den Identifizierungsangaben der Basisstationen und den Identifizierungselementen der Fahrzeuge bezüglich einer Flotte auf einem Server (8) gespeichert wird und die Korrespondenztabelle (7) jeder Mobilstation (5) in regelmäßigen Zeitabständen über eine Verbindung zwischen der Mobilstation (5) und dem Server (8) aktualisiert wird.

## Claims

1. A method of establishing a radio call between at least one resident subscriber (3) installed on a site and holding a mobile station (5), and at least one roaming subscriber (1) installed in a vehicle (2) equipped with a base station (4) suitable for transmitting a beacon signal identifying the base station (4), each mobile station (5) being adapted to sense a plurality of beacon signals transmitted by different base stations (4), the method comprising the steps of a mobile station (5) selecting a base station (4) and of setting up a call between the mobile station (5) and of the selected based station (4), the method being **characterized in that** each base station (4) includes an identification reference independent of the vehicle on which the base station is implanted, this identification reference being included in the corresponding beacon signal, and **in that** each mobile station (5) contains a correspondence table (7) between the identification reference of at least one base station (4) and an element for identifying the vehicle (2) on which the base station is implanted.

2. A method according to claim 1, **characterized in that** the correspondence table (7) between the identification reference of a base station and the corresponding vehicle identification element is stored in the base station (4), and the correspondence table held by a mobile station (5) is updated on each new detection of a beacon signal by the mobile station (5).

3. A method according to claim 1, **characterized in that** the correspondence table between the identification references of the base stations and the vehicle identification elements relating to a fleet is stored in a server (8), and of the correspondence table (7) of each mobile station (5) is periodically updated by a link from the mobile station (5) to the server (8).
